# EUROPEAN PATENT SPECIFICATION

(11) **EP 4 235 865 B1**
(45) Date of publication and mention of the grant of the patent: **27.08.2025**
(21) Application number: 23161454.6
(22) Date of filing: 29.05.2019
(51) Int. Cl.: H01M 4/36, H01M 4/38, H01M 4/48, H01M 4/62, H01M 10/0525, H01M 10/054, H01G 11/06, H01G 11/50, H01M 4/02

(54) **SILICON-BASED COMPOSITE NEGATIVE ELECTRODE MATERIAL, PREPARATION METHOD THEREFOR, AND ENERGY STORAGE DEVICE**
NEGATIVES VERBUNDELEKTRODENMATERIAL AUF SILIZIUMBASIS, HERSTELLUNGSVERFAHREN DAFÜR UND ENERGIESPEICHERVORRICHTUNG
MATÉRIAU D'ÉLECTRODE NÉGATIVE COMPOSITE À BASE DE SILICIUM ET SON PROCÉDÉ DE PRÉPARATION, ET DISPOSITIF DE STOCKAGE D'ÉNERGIE

(30) Priority: 30.08.2018 CN 201811004238
(43) Date of publication of application: 30.08.2023
(62) Divisional of application: 19853852.2
(73) Proprietor: Huawei Technologies Co., Ltd., Shenzhen, Guangdong 518129 (CN)
(72) Inventor: SU, Hang, Shenzhen, Guangdong 518129 (CN); WANG, Pinghua, Shenzhen, Guangdong 518129 (CN); LI, Yangxing, Shenzhen, Guangdong 518129 (CN)
(74) Representative: Goddar, Heinz J.

(56) References cited:
- WO-A1-2017/031062
- CN-A- 107 579 239
- US-A1- 2017 012 277
- YANG YONG ET AL: "Effects of lithium fluoride coating on the performance of nano-silicon as anode material for lithium-ion batteries", MATERIALS LETTERS, vol. 184, 3 August 2016 (2016-08-03), pages 65 - 68, XP029760714, ISSN: 0167-577X, [retrieved on 20160803], DOI: 10.1016/J.MATLET.2016.08.006

## Description

### TECHNICAL FIELD

The present invention relates to the field of secondary battery technologies, and in particular, to a silicon-based composite anode material, a preparation method thereof, and an energy storage device.

### BACKGROUND

Cathode and anode materials of a lithium-ion battery are main parts in fulfilling an energy storage function, and directly reflect energy density, cycle performance, and security performance of an electrochemical cell. When a current commercial cathode material: lithium cobalt oxide reaches a highest use limit (4.45 V, 4.2 g/cm³), a capacity of the anode plays a crucial role in improving the energy density of the entire electrochemical cell. However, a current actual capacity of a commercial graphite anode is 360 mAh/g, which approaches a theoretical value (372 mAh/g). Therefore, it is necessary to develop a new high-capacity commercial anode material.

A silicon-based material is one of the most studied anode materials as an alternative to the graphite. According to different degrees of reactions, silicon and lithium can generate different products, such as Li₁₂Si₁₇, Li₇Si₃, Li₁₃Si₄, and Li₂₂ Sis. A Li_{4.4}Si alloy formed by lithium interacted with silicon has a theoretical ratio of 4200 mAh/g and is an anode material with a theoretically maximum capacity. However, the silicon-based material undergoes severe volume expansion (0-300%) and contraction during lithium intercalation and deintercalation reaction, causing damage and pulverization of a structure of an electrode material. In addition, a silicon surface and an electrolyte continuously generate a new SEI (solid electrolyte interface film) film, causing electrolyte exhaustion, and rapid battery capacity attenuation.

In order to resolve the foregoing problems, currently, nanocrystallization is commonly used in the industry to alleviate a silicon volume expansion effect. However, nanocrystallization causes a high surface area with a feature of congulation proneness and low probability of dispersion, a large contact area with the electrolyte, fast consumption of the electrolyte, and the like. In order to further resolve the foregoing problems caused by nanocrystallization, a coating layer (including soft coating or hard coating such as a carbon material layer) is disposed on a surface of a nano-silicon anode material. However, although the soft coating (such as carbon coating) is tough to some extent, pores of the soft coating cannot actually alleviate a side reaction between silicon and the electrolyte. In addition, although the hard coating is of relatively high hardness, the hard coating is brittle and is likely to break and fall off during expansion and contraction.

The relevant prior art relating to silicon-based composite anode materials can be found in CN 107 579 239 A, US 2017/012277 A1, YANG YONG ET AL: "Effects of lithium fluoride coating on the performance of nano-silicon as anode material for lithium-ion batteries", MATERIALS LETTERS, vol. 184, 03.08.2016, pages 65-68 and WO 2017/031062 A1 on covalent organic frameworks.

### SUMMARY

In view of this, a first aspect of embodiments of the present invention provides a silicon-based composite anode material, and a coating layer of the silicon-based composite anode material can effectively alleviate a volume expansion effect of a silicon-based material core, and has high electrical conductivity and ionic conductivity performance, so as to resolve problems of pulverization, efficacy loss, and poor cycle performance that are caused by large expansion of an existing silicon-based material.

Specifically, a first aspect of the embodiments of the present invention provides a silicon-based composite anode material of claim 1.

The silicon-based composite anode material provided in the first aspect of the embodiments of the present invention includes a silicon-based material core and a coating layer disposed on a surface of the core, and the coating layer includes a first coating layer and a second coating layer coating the first coating layer. With superb toughness and ordered pore structure, the quinone-aldehyde covalent organic framework material of the first coating layer can effectively absorb mechanical stress generated by expansion of the silicon-based material core, ensure integrity of the coating layer, improve structural stability of the silicon-based material, and have high electrical conductivity and ionic conductivity, thereby effectively improving electron conduction and ion conduction effects of the coating layer. With a relatively strong rigid structure, the ion conductor material of the second coating layer can maintain structural stability of an entire material during silicon expansion and contraction, to effectively alleviate volume expansion, and increases energy density of the silicon-based electrochemical cell. In addition, The conducting
ionic material layer can further effectively prevent the electrolyte from in contact with the silicon-based material core to cause side reactions, thereby ensuring cycle performance of the material.

A second aspect of the embodiments of the present invention provides a method for preparing a silicon-based composite anode material of claim 8.

According to the foregoing preparation method in the present invention, a specific operation of growing a quinone-aldehyde covalent organic framework material in situ on a surface of the silicon-based material, to form a first coating layer is: adding the silicon-based material, a quinone substance precursor, and a trialdehyde substance into an organic solvent, to obtain a mixed solution, leaving the mixed solution in reaction at 80°C to 140°C for 1 to 7 days in an anaerobic condition, and after the reaction is completed, collecting solids through cooling and centrifugal separation, and adding the solids into the oxidant, to oxidize the quinone substance precursor into a quinone substance, so as to obtain a silicon-based material coated with the first coating layer, where the quinone substance precursor includes 2,5-diamino-1,4-dihydroxybenzo, the quinone substance includes 1,4-benzoquinone, and the trialdehyde substance includes 2,4,6-triformylphloroglucinol.

In the foregoing preparation method in the present invention, methods for coating the surface of the first coating layer with the ion conductor material, to form the second coating layer includes a hydrothermal method, a solvent-thermal method, a liquid phase precipitation method, a high energy ball milling method, or a high-temperature melting-casting method.

The method for preparing a silicon-based composite anode material provided in the second aspect of the embodiments of the present invention is simple in process and suitable for commercialized production.

According to a third aspect, an embodiment of the present invention further provides an energy storage device of claim 14.

The energy storage device includes a lithium-ion battery, a sodium ion battery, a magnesium ion battery, an aluminum ion battery, or a supercapacitor.The energy storage device provided in the embodiment of the present invention has high capacity and long cycle life by using the silicon-based composite anode material provided in the embodiments of the present invention.

Further embodiments are disclosed in the dependent claims.

### BRIEF DESCRIPTION OF DRAWINGS

FIG. 1 is a schematic structural diagram of a silicon-based composite anode material according to an embodiment of the present invention;
FIG. 2 is a flowchart of a method for preparing a silicon-based composite anode material according to an embodiment of the present invention; and
FIG. 3 is a comparison diagram of cycle performance between lithium ion batteries prepared in embodiments 1 to 2 of the present invention and a lithium ion battery in a comparison embodiment.

### DESCRIPTION OF EMBODIMENTS

The following describes the embodiments of the present invention with reference to the accompanying drawings in the embodiments of the present invention.

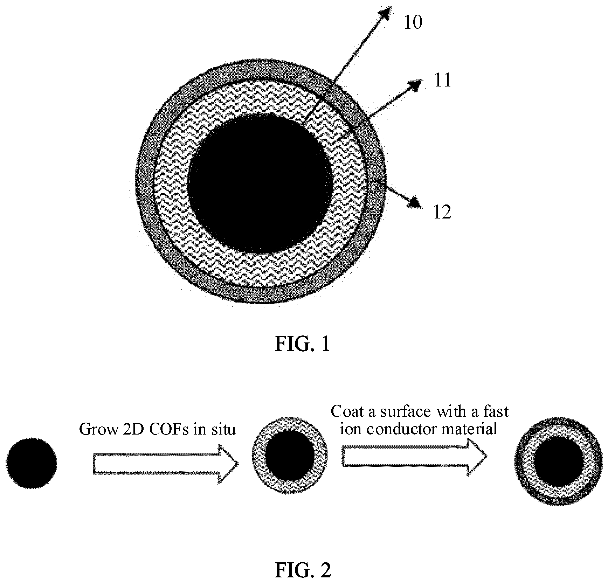

To resolve problems of pulverization, efficacy loss, and poor cycle performance that are caused by large volume expansion of a silicon-based composite anode material, an embodiment of the present invention provides a silicon-based composite anode material. As shown in FIG. 1, the silicon-based composite anode material includes a silicon-based material core 10 and a coating layer coated on a surface of the silicon-based material core 10. The coating layer is a double-layer structure, including a first coating layer 11 disposed on the surface of the silicon-based material core and a second coating layer 12 disposed on a surface of the first coating layer 11, the first coating layer 11 includes a quinone-aldehyde covalent organic framework material, and the second coating layer 12 includes an ion conductor material.

The silicon-based composite anode material provided in this embodiment of the present invention is a particle of a core-shell structure, namely, an egg-like structure, coated by two layers. The silicon-based material core 10 is similar to yolk, the first coating layer 11 is similar to white, and the second coating layer 12 is similar to an eggshell. The quinone-aldehyde covalent organic framework material of the first coating layer 11 has high electrical conductivity and ionic conductivity, and an electrical conductivity and ionic conductivity network is not destroyed during a lithium intercalation and deintercalation process, thereby effectively improving electron conduction and ion conduction effects of the coating layer. In addition, with superb toughness and a regular and ordered porous pore structure, the quinone-aldehyde covalent organic framework material can effectively absorb mechanical stress generated by expansion of the silicon-based material core, and ensure integrity of the coating layer, playing a similar role as a sponge. The fast ion conduction material of the second coating layer 12 can maintain structural stability and a volume size of the entire silicon-based material with a double-coating structure during expansion and contraction of silicon, thereby effectively alleviating volume expansion.

In this implementation of the present invention, the covalent organic framework (COFs) material is a crystalline-state material, with a regular and ordered porous framework structure, formed by connecting organic building units such as light elements C, O, N, and B through covalent bonds. Strong covalent interaction exists between building units in the framework material, and has advantages such as low mass density, high thermal stability, a high surface area, and a uniform pore size. The quinone-aldehyde covalent organic framework material has high electrical conductivity and ionic conductivity performance, and can rapidly intercalate/deintercalate a lithium ion by utilizing redox reactions in the quinone-aldehyde covalent organic framework material. In addition, an ordered pore channel of the framework material facilitates transmission of the lithium ion, thereby improving electrochemical performance of the silicon-based composite material. Specifically, the quinone-aldehyde covalent organic framework material includes a quinone substance and a trialdehyde substance. Optionally, in this implementation of the present invention, the quinone substance includes 2,6-diaminoanthraquinone (DAAQ) or 1,4-benzopuinone (DABQ), and the trialdehyde substance includes 2,4,6-triformylphloroglucinol (TFP). In other words, the quinone-aldehyde organic framework material may be DAAQ-TFP or DABQ-TFP. Optionally, a ratio of the quinone substance to the trialdehyde substance is 1:1 to 1:5, for example, may be specifically 1:1, 1:2, 1:3, 1:4, or 1:5.

In this implementation of the present invention, the first coating layer 11 is formed through in-situ growth of the quinone-aldehyde covalent organic framework material on the surface of the silicon-based material core and close layer-by-layer stacking, and the first coating layer completely coats the silicon-based material core. Countless nucleation sites are provided on the surface of the silicon-based material core for growth and bonding of the quinone-aldehyde covalent organic framework material, and the quinone-aldehyde covalent organic framework material uniformly grows on the surface of the silicon-based material core by using the nucleation sites, to form a uniform-thickness first coating layer. Optionally, a thickness of the first coating layer 11 is 5 nm to 200 nm, and may be specifically 10 nm to 30 nm, 50 nm to 100 nm, 80 nm to 150 nm, or 120 nm to 180 nm. The thickness of the first coating layer 11 may be set based on a specific size of the silicon-based material core 10. For example, when the core is a particle in a shape of a sphere or a spheroid, the thickness of the first coating layer 11 may be set to 5% to 30% of a radius of the silicon-based material core 10. An appropriate thickness of the first coating layer can effectively strengthen a buffer effect of the first coating layer without affecting electrochemical performance of the silicon-based material.

In this implementation of the present invention, the second coating layer includes an ion conductor material. The ion conductor material includes at least one of lithium fluoride (LiF) and an oxide solid-state electrolyte. Specifically, the oxide solid-state electrolyte includes one or more of a crystalline-state perovskite-type solid-state electrolyte, a crystalline-state NASICON-type solid-state electrolyte, a crystalline-state LISICON-type solid-state electrolyte, a gamet-type solid-state electrolyte, and a glass-state oxide solid-state electrolyte. Specifically, the oxide solid-state electrolyte includes but is not limited to Li₃PO₄, Li₂O, Li₆BaLa₂Ta₂O₁₂(LLZO), Li₇La₃Zr₂O₁₂, Li₅La₃Nb₂O₁₂, Li₅La₃M₂O₁₂(M = Nb,Ta), Li₇₊ₓAₓLa₃ - ₓZr₂O₁₂ (A = Zn), Li₃Zr₂Si₂PO₁₂, Li₅ZrP₃O₁₂, Li₅TiP₃O₁₂, Li₃Fe₂P₃O₁₂, Li₄NbP₃O₁₂, Li_{1.3}Al_{0.3}Ti_{1.7}(PO₄)₃(LATP), and the like.

According to the present invention, the second coating layer completely coats the first coating layer, and a surface of the first coating layer provides countless nucleation sites for attaching and bonding of the ion conductor materials. The ion conductor materials are used to perform uniform attaching and bonding on the surface of the first coating layer by using the nucleation sites, to form a uniform-thickness second coating layer.

According to the present invention, a thickness of the second coating layer 12 is 10 nm to 200 nm, and may be specifically 20 nm to 30 nm, 50 nm to 100 nm, 80 nm to 150 nm, or 120 nm to 180 nm. An appropriate thickness of the second coating layer can effectively coat an core material and buffer volume expansion without causing degradation of electrochemical performance of the core material. In this implementation of the present invention, the silicon-based material core 10 includes but is not limited to monatomic silicon, a silicon-oxygen compound, a silicon-carbon compound, and a silicon alloy. The silicon alloy may be, for example, one or more of a ferrosilicon alloy, an aluminum-silicon alloy, a copper-silicon alloy, and a silicon-tin alloy. According to the present invention, the particle size of the silicon-based material core 10 is 50 nm to 10 µm. Optionally, the particle size of the silicon-based material core 10 is 100 nm to 500 nm, 300 nm to 800 nm, 1 µm to 5µm, or 6 µm to 8 µm. A shape of the silicon-based material core 10 is not limited, and may be specifically in a shape of a sphere, a spheroid (for example, an ellipsoid) or a plate. The first coating layer 11 and the second coating layer 12 are a thin-layer structure coated on the surface of the core 10, and specific shapes of the first coating layer 11 and the second coating layer 12 depend on a shape of the silicon-based material core 10. To be specific, the silicon-based composite anode material is a core, of a core-shell structure, coated by two layers, and an overall outer shape of the particle mainly depends on the shape of the core 10.

Correspondingly, FIG. 2 shows a method for preparing the foregoing silicon-based composite anode material according to an embodiment of the present invention, and the method includes the following specific steps:

S10. Prepare a silicon-based material, and grow a quinone-aldehyde covalent organic framework material in situ on a surface of the silicon-based material, to form a first coating layer.

S20. Coat a surface of the first coating layer with an ion conductor material, to form a second coating layer, so that a silicon-based composite anode material is obtained, where the silicon-based composite anode material includes a silicon-based material core and a coating layer coated on a surface of the silicon-based material core, the coating layer includes the first coating layer disposed on the surface of the silicon-based material core and the second coating layer disposed on the surface of the first coating layer, the first coating layer includes the quinone-aldehyde covalent organic framework material, and the second coating layer includes the ion conductor material.

According to the present invention, in step S10, a specific operation of growing a quinone-aldehyde covalent organic framework material in situ on a surface of the silicon-based material, to form a first coating layer is: adding the silicon-based material, a quinone substance, and a trialdehyde substance into an organic solvent, to obtain a mixed solution; leaving the mixed solution in reaction at 80°C to 140°C for 1 to 7 days in an anaerobic condition; and after the reaction is completed, obtaining, through cooling and centrifugal separation, a silicon-based material coated with the first coating layer. The quinone substance includes 2,6-diaminoanthraquinone, and the trialdehyde substance includes 2,4,6-triformylphloroglucinol. Optionally, the organic solvent may be a mixed solvent including N,N-dimethylacetamide and mesitylene. Optionally, an operation of sequentially washing obtained solids by using N,N-dimethylformamide (DMF) and acetone is further performed after the centrifugal separation operation.

In another implementation of the present invention, in step S10, a specific operation of growing a quinone-aldehyde covalent organic framework material in situ on a surface of the silicon-based material, to form a first coating layer is: adding the silicon-based material, a quinone substance precursor, and a trialdehyde substance into an organic solvent, to obtain a mixed solution; leaving the mixed solution in reaction at 80°C to 140°C for 1 to 7 days in an anaerobic condition; and after the reaction is completed, collecting solids through cooling and centrifugal separation, and adding the solids into the oxidant, to oxidize the quinone substance precursor into a quinone substance, so as to obtain a silicon-based material coated with the first coating layer. The quinone substance precursor includes 2,5-diamino-1,4-dihydroxybenzo, the quinone substance includes 1,4-benzoquinone, and the trialdehyde substance includes 2,4,6-triformylphloroglucinol. Optionally, the organic solvent may be a mixed solvent including N,N-dimethylacetamide and mesitylene. Optionally, an operation of sequentially washing obtained solids by using N,N-dimethylformamide (DMF) and acetone is further performed after the centrifugal separation operation. Optionally, the oxidant is triethylamine, and the oxidization process is perfomed during 6 to 24 hours stirring under a room-temperature air atmosphere.

In this implementation of the present invention, in step S10, the silicon-based material core includes but is not limited to one or more of monatomic silicon, a silicon-oxygen compound, a silicon-carbon compound, and a silicon alloy. The silicon alloy may be, for example, one or more of a ferrosilicon alloy, an aluminum-silicon alloy, a copper-silicon alloy, and a silicon-tin alloy. In this implementation of the present invention, the particle size of the silicon-based material core is 50 nm to 10 µm. Optionally, the particle size of the silicon-based material core is 100 nm to 500 nm, 300 nm to 800 nm, 1 µm to 5 µm, or 6 µm to 8 µm. A shape of the silicon-based material core is not limited, and may be specifically in a shape of a sphere, a spheroid, a plate, or the like.

In this implementation of the present invention, the quinone-aldehyde covalent organic framework material includes a quinone substance and a trialdehyde substance. Optionally, the quinone substance includes 2,6-diaminoanthraquinone (DAAQ) or 1,4-benzopuinone (DABQ), and the trialdehyde substance includes 2,4,6-triformylphloroglucinol (TFP). In other words, the quinone-aldehyde organic framework material may be DAAQ-TFP or DABQ-TFP. Optionally, a ratio of the quinone substance to the trialdehyde substance is 1:1 to 1:5, for example, may be specifically 1:1, 1:2, 1:3, 1:4, or 1:5.

In this implementation of the present invention, the first coating layer is formed through in-situ growth of the quinone-aldehyde covalent organic framework material on the surface of the silicon-based material core and close layer-by-layer stacking, and the first coating layer completely coats the silicon-based material core. Countless nucleation sites are provided on the surface of the silicon-based material core for growth and bonding of the quinone-aldehyde covalent organic framework material, and the quinone-aldehyde covalent organic framework material uniformly grows on the surface of the silicon-based material core by using the nucleation sites, to form a uniform-thickness first coating layer. Optionally, a thickness of the first coating layer 11 is 5 nm to 200 nm, and may be specifically 10 nm to 30 nm, 50 nm to 100 nm, 80 nm to 150 nm, or 120 nm to 180 nm. The thickness may be adjusted by controlling a time in which the mixture reacts at 80°C to 140°C.

In this implementation of the present invention, in step S20, methods for coating the surface of the first coating layer with the ion conductor material, to form the second coating layer includes a hydrothermal method, a solvent-thermal method, a liquid phase precipitation method, a high energy ball milling method, or a high-temperature melting-casting method. Specific operation parameters of the methods may be determined based on an actual condition. This is not particularly limited in the present invention.

In this implementation of the present invention, in step S20, the ion conductor material includes at least one of lithium fluoride (LiF) and an oxide solid-state electrolyte. Specifically, the oxide solid-state electrolyte includes one or more of a crystalline-state perovskite-type solid-state electrolyte, a crystalline-state NASICON-type solid-state electrolyte, a crystalline-state LISICON-type solid-state electrolyte, a gamet-type solid-state electrolyte, and a glass-state oxide solid-state electrolyte. Specifically, the oxide solid-state electrolyte includes but is not limited to Li₃PO₄, Li₂O, Li₆BaLa₂Ta₂O₁₂, Li₇La₃Zr₂O₁₂, Li₅La₃Nb₂O₁₂, LisLa₃M₂O₁₂(M = Nb,Ta), Li₇₊ₓAₓLa_{3 - x}Zr₂O₁₂ (A = Zn), Li₃Zr₂Si₂PO₁₂, Li₅ZrP₃O₁₂, Li₅TiP₃O₁₂, Li₃Fe₂P₃O₁₂, Li₄NbP₃O₁₂, Li_{1.3}Al_{0.3}Ti_{1.7}(PO₄)₃(LATP), and the like.

In this implementation of the present invention, the second coating layer completely coats the first coating layer, and the surface of the first coating layer provides countless nucleation sites for attaching and bonding of the ion conductor materials. The ion conductor materials are used to perform uniform attaching and bonding on the surface of the first coating layer by using the nucleation sites, to form a uniform-thickness second coating layer. In this implementation of the present invention, a thickness of the second coating layer 12 is 10 nm to 200 nm, and may be specifically 20 nm to 30 nm, 50 nm to 100 nm, 80 nm to 150 nm, or 120 nm to 180 nm.

The method for preparing a silicon-based composite anode material provided in this embodiment of the present invention is easy to implement and facilitates large-scale production.

In addition, an embodiment of the present invention further provides an energy storage device, including a cathode, an anode, and a separator located between the cathode and the anode. The anode includes the silicon-based composite anode material in the foregoing embodiment of present invention. The energy storage device includes a lithium-ion battery, a sodium ion battery, a magnesium ion battery, an aluminum ion battery, or a supercapacitor.

The following further describe the embodiments of the present invention by using a plurality of embodiments.

### Embodiment 1

This embodiment provides a method for preparing a silicon-based composite anode material (Si@DAAQ-TFP@LATP), and a method for assembling Si@DAAQ-TFP@LATP as a lithium ion battery anode into a lithium secondary battery:

### S10. Prepare Si@DAAQ-TFP

Commercial nano-silicon of a median particle size of 100 nm and DAAQ and TFP with a stoichiometric ratio of 1:1 are dissolved in a mixed solvent of N,N-dimethylacetamide and mesitylene, to obtain a mixed solution, and the mixed solution is left in reaction at 80°C to 140°C for 1 to 7 days in a sealed anaerobic condition. After the solution cools to a room temperature, centrifugal separation is performed on obtained materials to obtain solids, and the solids are washed by sequentially using N,N-dimethylformamide (DMF) and acetone. Nano-silicon coated with DAAQ-TFP, namely, Si@DAAQ-TFP is obtained once the solids dry.

### S20. Prepare Si@DAAQ-TFP@LATP

10 g Si@DAAQ-TFP is added into 100 mL deionized water, and after ultrasonic dispersion, lithium acetate dihydrate (Li(CH₃COO)·2H₂O) of molar concentration of 0.26 mol/L, aluminum nitrate (Al(NO₃)₃·9H₂O) of molar concentration of 0.6 mol/L, and ammonium dihydrogen phosphate (NH₄H₂PO₄) of molar concentration of 0.6 mol/L are sequentially added into the water. Magnetical stirring is performed at a room temperature to implement complete dissolution, so that a mixed solution is obtained. 5 mL acetylacetone is added into the mixed solution and stirred for 15 minutes, and then titanium butoxide with a stoichiometric ratio of 0.34 mol/L is dropwise added and stirred for another 2 hours, to obtain Si@DAAQ-TFP@LATP sol. The sol maintains static for 24 hours for aging, and an obtained gel is dried in vacuum at 100°C for 6 hours. Finally, the temperature is risen to 700°C at 5°C /min, namely, for 2 hours, to obtain Si@DAAQ-TFP coated with Li_{1.3}Al_{0.3}Ti_{1.7}(PO₄)₃(LATP), namely, Si @DAAQ-TFP@LATP composite anode material.

### Prepare a lithium secondary battery

The Si@DAAQ-TFP@LATP composite anode material obtained from preparation in this embodiment and commercial graphite G49 are mixed into a 600 mAh/g anode material. The anode material and a conductive agent Super P, binder styrene-butadiene rubber (SBR), carboxymethyl cellulose (CMC) are dispersed in deionized water at a mass ratio of 95:0.3:3.2:1.5, and uniformly stirred to obtain an electrode slurry. The electrode slurry is coated on a surface of a copper foil, and the foil is dried at 85°C to obtain an anode plate. A pouch cell battery of about 3.7 Ah is produced using the anode plate as an anode a commercial lithium cobalt oxide as an anode, a 1 mol/L LiPF6/EC+PC+DEC+EMC (a volume ratio 1:0.3:1:1) electrolyte as the electrolyte, and a PP/PE/PP three-layer separator of a thickness of 10 µm as a separator, so as to test full battery performance of the material.

### Embodiment 2

This embodiment provides a method for preparing a silicon-based composite anode material (SiO@DABQ-TFP@LLZO), and a method for assembling SiO@DABQ-TFP@LLZO as a lithium ion battery anode material into a lithium secondary battery:

### S10. Prepare SiO@DABQ-TFP

SiO of a particle size of 1 µm to 10 µm and 2,5-diamino-1,4-dihydroxybenzo (DABH) and TFP with a stoichiometric ratio of 7:2 are dissolved in a mixed solvent of N,N-dimethylacetamide and mesitylene, to obtain a mixed solution, and the mixed solution is left in reaction at 85°C to 120°C for 1 to 7 days in a sealed anaerobic condition. After the solution cools to a room temperature, centrifugal separation is performed on obtained materials to obtain solids, and the solids are washed by sequentially using N,N-dimethylformamide (DMF) and tetrahydrofuran. A SiO@DABH-TFP material is obtained once the solids dry. The SiO@DABH-TFP is gradually added into triethylamine to obtain a suspension. The suspension is stirred for 6 to 24 hours at a room-temperature open atmosphere to oxidize, and is leached. After leaching, a filter cake is washed by using tetrahydrofuran, acetone and methanol, and a SiO material coated with DABQ-TFP, namely, SiO@DABQ-TFP is obtained once the filter cake dries.

### S20. Prepare SiO@DABQ-TFP@LLZO

Li₂CO₃, La₂O₃ and ZrO(NO₃)₂·6H₂O are prepared as starting materials, and the materials are put into water at a molar ratio of 7.7:3:2 and dissolve in the water. pH is adjusted to 7, to obtain an LLZO precursor compound solution. The SiO@DABQ-TFP sample is dispersed in the LLZO precursor compound solution and thoroughly mixed, and the solution is filtered, to obtain solids. After the obtained solids are dried, the solids are sintered at 450°C for 16 hours (at an argon atmosphere), to obtain a SiO@DABQ-TFP material coated with LLZO, namely, a SiO@DABQ-TFP@LLZO composite anode material.

### Prepare a lithium secondary battery

The SiO@DABQ-TFP@LLZO composite anode material obtained from preparation in this embodiment and commercial graphite G49 are mixed into a 600 mAh/g anode material. The anode material and a conductive agent carbon black, a binder (SBR), and CMC are dispersed in deionized water at a mass ratio of 95:0.3:3.2:1.5, and uniformly stirred to obtain an electrode slurry. The electrode slurry is coated on a surface of a copper foil, and the foil is dried at 85°C to obtain an anode plate. A pouch cell battery of about 3.7 Ah is produced using the anode plate as an anode, a commercial lithium cobalt oxide as a cathode, a 1 mol/L LiPF₆/EC+PC+DEC+EMC (a volume ratio 1:0.3:1:1) electrolyte as the electrolyte, a PP/PE/PP three-layer separator (of a thickness of 10 µm) as a separator, so as to test full battery performance of the material.

### Comparative embodiment

Commercial nano-silicon of a median particle size of 100 nm and commercial artificial graphite G49 are mixed into a 600 mAh/g anode material. The anode material and a conductive agent Super P, a binder SBR, and CMC are dispersed in deionized water at a mass ratio of 95:0.3:3.2:1.5, and uniformly stirred to obtain an electrode slurry. The electrode slurry is coated on a surface of a copper foil, and the foil is dried at 85°C to obtain an anode plate. A pouch cell battery of about 3.7 Ah is produced, for performance testing, using the anode plate as an anode, a commercial lithium cobalt oxide as a cathode, a 1 mol/L LiPF6/EC+PC+DEC+EMC (a volume ratio is 1:0.3:1:1) electrolyte as the electrolyte, and a PP/PE/PP three-layer separator of a thickness of 10 µm as a separator.

### Effect embodiment

1. Table 1 shows a comparison among physicochemical parameters of the Si@DAAQ-TFP@LATP composite anode material in Embodiment 1 of the present invention, the SiO@DABQ-TFP@LLZO composite anode material in Embodiment 2 of the present invention, and the commercial nano-silicon:

**Table 1**

| Item | Surface area m²/g | Tap density g/cm³ | Semi-electrode plate expansion rate % |
|---|---|---|---|
| Si@DAAQ-TFP@LATP | 72 | 0.6 | 22% |
| SiO@DABQ-TFP@LLZO | 68 | 0.58 | 23% |
| Commercial nano-silicon | 80 | 0.54 | 30% |

The surface area is measured by using a gas adsorption BET principle; tap density is measured according to a GB5162 national standard; a semi-electrode plate expansion rate is a thickness increase rate, when an electrochemical cell is at a 50% battery power state (50% SOC), of a cathode (anode) plate compared with a cathode (anode) plate before formation. Usually, a thickness of the electrode plate before formation under 50% SOC is measured through a micrometer, and the expansion rate is calculated, where the expansion rate essentially reflects expansion of an active material.

It can be learned from data in Table 1 that the silicon-based composite anode materials with a double-layer coating layer structure in Embodiment 1 and Embodiment 2 of the present invention have an apparent advantage over the nano-silicon material.
(1) In Embodiment 1 and Embodiment 2 of the present invention, the expansion rates of the semi-electrode plate of the silicon-based composite anode material are 22% and 23% respectively, which are significantly improved compared with an expansion rate of 30% of the semi-electrode plate of the nano-silicon in the comparative embodiment. This is because the quinone-aldehyde covalent organic framework material of the first coating layer of the silicon-based composite anode material in this embodiment of the present invention has superior toughness and a regular ordered porous pore structure, can effectively absorb mechanical stress generated by expansion of the silicon-based material core, and can ensure integrity of the coating layer, functioning as a sponge. For the electrochemical cell, the silicon-based composite anode material can effectively alleviate impact caused by volume contraction of the silicon material on a volume of the electrochemical cell during an electrochemical lithium intercalation and deintercalation process of the silicon-based material. In addition, structural stability of the coating layer of the silicon-based material can be ensured, and interface performance of the anode and electrochemical cycle performance of the electrochemical cell can be improved.
(2) The silicon-based composite anode materials in Embodiment 1 and Embodiment 2 of the present invention have a lower surface area than the nano-silicon in the comparative embodiment because the coating layer directly coats on a surface of an original nano-silicon particle. To be specific, the particle size of the coated material increases, and the coating layer material effectively fills pores on the surface of the nano-silicon particle. As a result, a surface area is smaller as a whole. For the electrochemical cell, for an active material of a low surface area, a contact area of the surface of the particle and the electrolyte can be narrowed, thereby reducing a side reaction of the electrolyte in an electrochemical reaction (for example, an electrolyte solvent dissolves and generates gas (H₂, O₂), and a SEI film forms), and improving cycle performance of the electrochemical cell as a whole.
(3) The silicon-based composite anode materials in Embodiment 1 and Embodiment 2 of the present invention have higher tap density than that of the nano-silicon in the comparative embodiment. Because the ion conductor layer of the outer second coating layer is relatively rigid, stability and hardness of an overall structure of the coated silicon-based material particle are ensured. In battery production craftsmanship, relatively high tap density of a material corresponds to better processing performance of the electrode, can improve packing density of the active material in an electrode, and can further improve energy density of the electrochemical cell. In addition, the rigid coating layer can further effectively alleviate impact caused by volume contraction of the silicon material on structural stability of the coated particle during the electrochemical lithium intercalation and deintercalation process of the silicon-based material, thereby preventing collapse, pulverization and shedding of the particle structure and improving electrochemical cycle performance of the electrochemical cell.

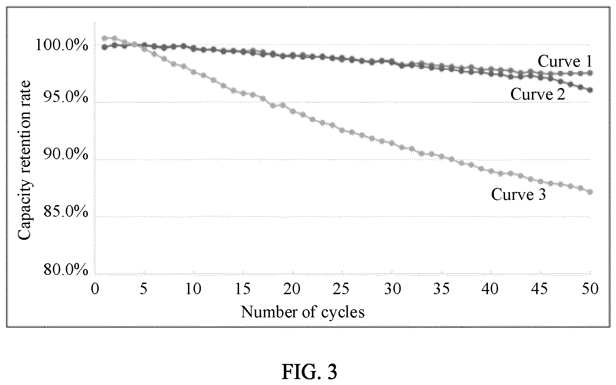

2. Cycle performance testing is separately performed on the pouch cell battery prepared in Embodiment 1 of the present invention, the pouch cell battery in Embodiment 2 of the present invention, and the pouch cell battery prepared in the comparative embodiment under the following conditions: a same electrochemical cell type (386174), a same capacity (about 3.7 Ah), same current density (0.7 C), and a test temperature (25°C). Testing results are shown in FIG. 3, where curves 1, 2, 3 represent battery cycle curves of the pouch cell batteries prepared in Embodiment 1, Embodiment 2 and the comparative embodiment respectively. As shown in FIG. 3, capacity retention rates of the lithium ion batteries prepared in Embodiment 1, Embodiment 2, and the comparative embodiment after 50 cycles are respectively 97.5%, 96.2%, and 87.1%, and cycle performance of electrochemical cells, in Embodiment 1 and Embodiment 2, prepared using the silicon-based composite anode material of a double-coating layer structure in the present invention is significantly better than the electrochemical cell of the commercial nano-silicon in the comparative embodiment. This indicates that a silicon-based material coated with a quinone-aldehyde covalent organic framework material and a fast ion conductor material performs better in coating, has higher electrical conductivity and ionic conductivity, a lower expansion rate and better structural stability, and this is a root cause of improvement of cycle performance.

## Claims

1. A silicon-based composite anode material, comprising a silicon-based material core (10) and a coating layer coated on a surface of the silicon-based material core, wherein the coating layer comprises a first coating layer (11) disposed on the surface of the silicon-based material core (10) and a second coating layer (12) disposed on a surface of the first coating layer (11), wherein the second coating layer (12) comprises an ionic conductor, and a thickness of the second coating layer is 10 nm to 200 nm, and the second coating layer (12) completely coats the first coating layer (11), and a particle size of the silicon-based material core (10) is 50 nm to 10 µm wherein the quinone-aldehyde covalent organic framework material comprises a quinone substance and a trialdehyde substance, the quinone substance comprises 2,6-diaminoanthraquinone or 1,4-benzopuinone, and the trialdehyde substance comprises 2,4,6-triformylphloroglucinol, and wherein the ion conductor material comprises at least one of lithium fluoride and an oxide solid-state electrolyte.

2. The silicon-based composite anode material according to claim 1, wherein a mass ratio of the quinone substance to the trialdehyde substance is 1:1 to 1:5.

3. The silicon-based composite anode material according to claim 1, wherein the first coating layer is formed through in-situ growth of the quinone-aldehyde covalent organic framework material on the surface of the silicon-based material core and close layer-by-layer stacking, and the first coating layer completely coats the silicon-based material core.

4. The silicon-based composite anode material according to claim 1, wherein a thickness of the first coating layer is 5 nm to 200 nm.

5. The silicon-based composite anode material according to claim 1, wherein the oxide solid-state electrolyte comprises one or more of a crystalline-state perovskite-type solid-state electrolyte, a crystalline-state NASICON-type solid-state electrolyte, a crystalline-state LISICON-type solid-state electrolyte, a gamet-type solid-state electrolyte, and a glass-state oxide solid-state electrolyte.

6. The silicon-based composite anode material according to claim 1, wherein the silicon-based material core comprises one or more of monatomic silicon, a silicon-oxygen compound, a silicon-carbon compound, and a silicon alloy.

7. The silicon-based composite anode material according to claim 1, wherein the silicon-based material core is in a shape of a sphere, a spheroid.

8. A method for preparing the silicon-based composite anode material, according to any of claims 1-7, comprising the following steps:
preparing a silicon-based material, and growing a quinone-aldehyde covalent organic framework material in situ on a surface of the silicon-based material, to form a first coating layer; (11) and
coating a surface of the first coating layer (11) with an ionic conductor material, to form a second coating layer (12), so that a silicon-based composite anode material is obtained, wherein the silicon-based composite anode material comprises a silicon-based material core (10)
and a coating layer coated on a surface of the silicon-based material core, the coating layer comprises the first coating layer (11) disposed on the surface of the silicon-based material core (10) and the second coating layer (12) disposed on the surface of the first coating layer (11), the first coating layer (11) comprises the quinone-aldehyde covalent organic framework material, and the second coating layer (12)
comprises the ionic conductor material, wherein the ionic conductor material comprises at least one of lithium fluoride and an oxide solid-state electrolyte and the thickness of the second coating layer is 10 nm to 200 nm, and the second coating layer (12) completely coats the first coating layer (11), and a particle size of the silicon-based material core (10) is 50 nm to 10 µm, wherein a specific operation of growing the quinone-aldehyde covalent organic framework material in situ on a surface of the silicon-based material, to form a first coating layer (11) is: adding the silicon-based material, a quinone substance, and a trialdehyde substance into an organic solvent, to obtain a mixed solution, leaving the mixed solution in reaction at 80°C to 140°C for 1 to 7 days in an anaerobic condition, and after the reaction is completed, obtaining a silicon-based material coated with the first coating layer (11) through cooling and centrifugal separation, wherein the quinone substance comprises 2,6-diaminoanthraquinone, and the trialdehyde substance comprises 2,4,6-triformylphloroglucinol.

9. The preparation method according to claim 8, wherein a specific operation of growing a quinone-aldehyde covalent organic framework material in situ on a surface of the silicon-based material, to form a first coating layer is: adding the silicon-based material, a quinone substance precursor, and a trialdehyde substance into an organic solvent, to obtain a mixed solution, leaving the mixed solution in reaction at 80°C to 140°C for 1 to 7 days in an anaerobic condition, and after the reaction is completed, collecting solids through cooling and centrifugal separation, and adding the solids into the oxidant, to oxidize the quinone substance precursor into a quinone substance, so as to obtain a silicon-based material coated with the first coating layer, wherein the quinone substance precursor comprises 2,5-diamino-1,4-dihydroxybenzo, the quinone substance comprises 1,4-benzoquinone, and the trialdehyde substance comprises 2,4,6-triformylphloroglucinol.

10. The preparation method according to claim 8, wherein methods for coating the surface of the first coating layer with the ion conductor material, to form the second coating layer comprises a hydrothermal method, a solvent-thermal method, a liquid phase precipitation method, a high energy ball milling method, or a high-temperature melting-casting method.

11. An energy storage device, comprising a cathode, an anode, and a separator located between the cathode and the anode, wherein the anode comprises the silicon-based composite anode material according to any one of claims 1 to 7.

12. The energy storage device according to claim 11, wherein the energy storage device comprises a lithium-ion battery, a sodium ion battery, a magnesium ion battery, an aluminum ion battery, or a supercapacitor.

## Patentansprüche

1. Verbundanodenmaterial auf Siliziumbasis, das einen Kern (10) aus einem Material auf Siliziumbasis und eine Beschichtungsschicht umfasst, die auf eine Oberfläche des Kerns aus einem Material auf Siliziumbasis aufgetragen ist, wobei die Beschichtungsschicht eine erste Beschichtungsschicht (11), die auf der Oberfläche des Kerns (10) aus einem Material auf Siliziumbasis angeordnet ist, und eine zweite Beschichtungsschicht (12), die auf einer Oberfläche der ersten Beschichtungsschicht (11) angeordnet ist, umfasst, wobei die zweite Beschichtungsschicht (12) einen Ionenleiter umfasst und eine Dicke der zweiten Beschichtungsschicht 10 nm bis 200 nm beträgt, und die zweite Beschichtungsschicht (12) die erste Beschichtungsschicht (11) vollständig beschichtet, und eine Partikelgröße des Kerns (10) aus einem Material auf Siliziumbasis 50 nm bis 10 µm beträgt, wobei das Chinon-Aldehyd-kovalente organische Gerüstmaterial eine Chinonsubstanz und eine Trialdehydsubstanz umfasst, die Chinonsubstanz 2,6-Diaminoanthrachinon oder 1,4-Benzopuinon umfasst und die Trialdehydsubstanz 2,4,6-Triformylphloroglucinol umfasst, und wobei das Ionenleitermaterial mindestens eines von Lithiumfluorid und einem Oxid-Festkörperelektrolyten umfasst.

2. Verbundanodenmaterial auf Siliziumbasis nach Anspruch 1, wobei ein Massenverhältnis der Chinonsubstanz zu der Trialdehydsubstanz 1:1 bis 1:5 beträgt.

3. Verbundanodenmaterial auf Siliziumbasis nach Anspruch 1, wobei die erste Beschichtungsschicht durch in-situ-Wachstum des Chinon-Aldehyd-kovalenten organischen Gerüstmaterials auf der Oberfläche des Kerns aus einem Material auf Siliziumbasis und dichtes Schicht-für-Schicht-Stapeln gebildet wird und die erste Beschichtungsschicht den Kern aus einem Material auf Siliziumbasis vollständig beschichtet.

4. Verbundanodenmaterial auf Siliziumbasis nach Anspruch 1, wobei eine Dicke der ersten Beschichtungsschicht 5 nm bis 200 nm beträgt.

5. Verbundanodenmaterial auf Siliziumbasis nach Anspruch 1, wobei der Oxid-Festkörperelektrolyt eines oder mehrere von einem Festkörperelektrolyt vom Perowskit-Typ im kristallinen Zustand, einem Festkörperelektrolyt vom NASICON-Typ im kristallinen Zustand, einem Festkörperelektrolyt vom LISICON-Typ im kristallinen Zustand, einem Festkörperelektrolyt vom Granattyp und einem Oxid-Festkörperelektrolyt im Glaszustand umfasst.

6. Verbundanodenmaterial auf Siliziumbasis nach Anspruch 1, wobei der Kern aus einem Material auf Siliziumbasis eines oder mehrere von einem einatomigen Silizium, einer Silizium-Sauerstoff-Verbindung, einer Silizium-Kohlenstoff-Verbindung und einer Siliziumlegierung umfasst.

7. Verbundanodenmaterial auf Siliziumbasis nach Anspruch 1, wobei der Kern aus einem Material auf Siliziumbasis in Form einer Kugel oder eines Sphäroids vorliegt.

8. Verfahren zur Herstellung des Verbundanodenmaterials auf Siliziumbasis nach einem der Ansprüche 1-7, umfassend die folgenden Schritte:
Herstellen eines Materials auf Siliziumbasis und Züchten eines Chinon-Aldehyd-kovalenten organischen Gerüstmaterials in situ auf einer Oberfläche des Materials auf Siliziumbasis, um eine erste Beschichtungsschicht (11) zu bilden; und
Beschichten einer Oberfläche der ersten Beschichtungsschicht (11) mit einem Ionenleitermaterial, um eine zweite Beschichtungsschicht (12) zu bilden, so dass ein Verbundanodenmaterial auf Siliziumbasis erlangt wird, wobei das Verbundanodenmaterial auf Siliziumbasis einen Kern (10) aus einem Material auf Siliziumbasis umfasst;
und eine Beschichtungsschicht, die auf eine Oberfläche des Kerns aus einem Material auf Siliziumbasis aufgebracht ist, wobei die Beschichtungsschicht die erste Beschichtungsschicht (11) umfasst, die auf der Oberfläche des Kerns (10) aus einem Material auf Siliziumbasis aufgetragen ist;
und die zweite Beschichtungsschicht (12), die auf der Oberfläche der ersten Beschichtungsschicht (11) angeordnet ist, wobei die erste Beschichtungsschicht (11) das kovalente organische Chinon-Aldehyd-Gerüstmaterial umfasst und die zweite Beschichtungsschicht (12) das Ionenleitermaterial umfasst, wobei das Ionenleitermaterial mindestens eines von Lithiumfluorid und einem Oxid-Festkörperelektrolyten umfasst und die Dicke der zweiten Beschichtungsschicht 10 nm bis 200 nm beträgt, und die zweite Beschichtungsschicht (12) die erste Beschichtungsschicht (11) vollständig beschichtet, und eine Partikelgröße des Kerns (10) aus einem Material auf Siliziumbasis 50 nm bis 10 µm beträgt, wobei ein spezieller Vorgang des Züchtens des kovalenten organischen Chinon-Aldehyd-Gerüstmaterials in situ auf einer Oberfläche des Materials auf Siliziumbasis zum Bilden einer ersten Beschichtungsschicht (11) Folgender ist: Hinzufügen des Materials auf Siliziumbasis, einer Chinonsubstanz und einer Trialdehydsubstanz in ein organisches Lösungsmittel zum Erlangen einer gemischten Lösung, Belassen der gemischten Lösung in Reaktion bei 80 °C bis 140 °C für 1 bis 7 Tage bei einer anaeroben Bedingung, und nach Abschluss der Reaktion, Erlangen eines Materials auf Siliziumbasis, das mit der ersten Beschichtungsschicht (11) beschichtet ist,
durch Kühlen und Zentrifugaltrennung, wobei die Chinonsubstanz 2,6-Diaminoanthrachinon umfasst und die Trialdehydsubstanz 2,4,6-Triformylphloroglucinol umfasst.

9. Herstellungsverfahren nach Anspruch 8, wobei ein spezifischer Vorgang des Züchtens eines Chinon-Aldehyd-kovalenten organischen Gerüstmaterials in situ auf einer Oberfläche des Materials auf Siliziumbasis zum Bilden einer ersten Beschichtungsschicht Folgender ist: Hinzufügen des Materials auf Siliziumbasis, einer Vorstufe einer Chinonsubstanz und einer Trialdehydsubstanz in ein organisches Lösungsmittel, um eine gemischte Lösung zu erlangen, Belassen der gemischten Lösung in Reaktion bei 80 °C bis 140 °C für 1 bis 7 Tage bei einer anaeroben Bedingung und nach Abschluss der Reaktion, Sammeln von Feststoffen durch Kühlen und Zentrifugaltrennung und Hinzufügen der Feststoffe zu dem Oxidationsmittel, um den Vorläufer der Chinonsubstanz zu einer Chinonsubstanz zu oxidieren, um so ein Material auf Siliziumbasis zu erlangen, das mit der ersten Beschichtungsschicht beschichtet ist, wobei der Vorläufer der Chinonsubstanz 2,5-Diamino-1,4-Dihydroxybenzo umfasst, die Chinonsubstanz 1,4-Benzochinon umfasst und die Trialdehydsubstanz 2,4,6-Triformylphloroglucinol umfasst.

10. Herstellungsverfahren nach Anspruch 8, wobei Verfahren zum Beschichten der Oberfläche der ersten Beschichtungsschicht mit dem Ionenleitermaterial, um die zweite Beschichtungsschicht zu bilden, ein Hydrothermalverfahren, ein Lösungsmittel-Thermalverfahren, ein Flüssigphasen-Präzipitationsverfahren, ein Hochenergie-Kugelmahlverfahren oder ein Hochtemperatur-Schmelzgießverfahren umfasst.

11. Energiespeichervorrichtung, umfassend eine Kathode, eine Anode und einen zwischen der Kathode und der Anode angeordneten Separator, wobei die Anode das Verbundanodenmaterial auf Siliziumbasis nach einem der Ansprüche 1 bis 7 umfasst.

12. Energiespeichervorrichtung nach Anspruch 11, wobei die Energiespeichervorrichtung eine Lithium-Ionen-Batterie, eine Natrium-Ionen-Batterie, eine Magnesium-Ionen-Batterie, eine Aluminium-Ionen-Batterie oder einen Superkondensator umfasst.

## Revendications

1. Matériau d'anode composite à base de silicium, comprenant un noyau de matériau à base de silicium (10) et une couche de revêtement appliquée sur une surface du noyau de matériau à base de silicium, dans lequel la couche de revêtement comprend une première couche de revêtement (11) disposée sur la surface du noyau de matériau à base de silicium (10) et une seconde couche de revêtement (12) disposée sur une surface de la première couche de revêtement (11), dans lequel la seconde couche de revêtement (12) comprend un conducteur ionique et une épaisseur de la seconde couche de revêtement est comprise entre 10 nm et 200 nm, et la seconde couche de revêtement (12) recouvre entièrement la première couche de revêtement (11), et une taille de particule du noyau de matériau à base de silicium (10) est comprise entre 50 nm et 10 µm dans lequel le matériau de structure organique covalente quinone-aldéhyde comprend une substance quinone et une substance trialdéhyde, la substance quinone comprend la 2,6-diaminoanthraquinone ou la 1,4-benzopuinone, et la substance trialdéhyde comprend le 2,4,6-triformylphloroglucinol, et dans lequel le matériau conducteur à ions comprend au moins l'un parmi le fluorure de lithium et un électrolyte solide d'oxyde.

2. Matériau d'anode composite à base de silicium selon la revendication 1, dans lequel un rapport massique de la substance quinone à la substance trialdéhyde est compris entre 1:1 et 1:5.

3. Matériau d'anode composite à base de silicium selon la revendication 1, dans lequel la première couche de revêtement est formée par croissance in situ du matériau de structure organique covalente quinone-aldéhyde sur la surface du noyau de matériau à base de silicium et par empilement couche par couche serré, et la première couche de revêtement recouvre complètement le noyau de matériau à base de silicium.

4. Matériau d'anode composite à base de silicium selon la revendication 1, dans lequel une épaisseur de la première couche de revêtement est comprise entre 5 nm et 200 nm.

5. Matériau d'anode composite à base de silicium selon la revendication 1, dans lequel l'électrolyte solide d'oxyde comprend un ou plusieurs parmi un électrolyte solide de type pérovskite à l'état cristallin, un électrolyte solide de type NASICON à l'état cristallin, un électrolyte solide de type LISICON à l'état cristallin, un électrolyte solide de type grenat, et un électrolyte solide d'oxyde à l'état vitreux.

6. Matériau d'anode composite à base de silicium selon la revendication 1, dans lequel le noyau de matériau à base de silicium comprend un ou plusieurs parmi le silicium monoatomique, un composé silicium-oxygène, un composé silicium-carbone, et un alliage de silicium.

7. Matériau d'anode composite à base de silicium selon la revendication 1, dans lequel le noyau de matériau à base de silicium a la forme d'une sphère, d'un sphéroïde.

8. Procédé de préparation d'un matériau d'anode composite à base de silicium, selon l'une quelconque des revendications 1 à 7, comprenant les étapes suivantes :
la préparation d'un matériau à base de silicium, et la croissance d'un matériau de structure organique covalente quinone-aldéhyde in situ sur une surface du matériau à base de silicium, pour former une première couche de revêtement (11) ; et
le revêtement d'une surface de la première couche de revêtement (11) avec un matériau conducteur ionique, pour former une seconde couche de revêtement (12), de sorte qu'un matériau d'anode composite à base de silicium est obtenu, dans lequel le matériau d'anode composite à base de silicium comprend un noyau de matériau à base de silicium (10)
et une couche de revêtement appliquée sur une surface du noyau de matériau à base de silicium, la couche de revêtement comprend la première couche de revêtement (11) disposée sur la surface du noyau de matériau à base de silicium (10)
et la seconde couche de revêtement (12) disposée sur la surface de la première couche de revêtement (11), la première couche de revêtement (11) comprend le matériau de structure organique covalent quinone-aldéhyde, et la seconde couche de revêtement (12) comprend le matériau conducteur ionique, dans lequel le matériau conducteur ionique comprend au moins un élément parmi le fluorure de lithium et un électrolyte solide à base d'oxyde et l'épaisseur de la seconde couche de revêtement est comprise entre 10 nm et 200 nm, et la seconde couche de revêtement (12) recouvre entièrement la première couche de revêtement (11), et une taille de particule du noyau de matériau à base de silicium (10) est comprise entre 50 nm et 10 µm, dans lequel une opération spécifique de croissance du matériau de structure organique covalent quinone-aldéhyde in situ sur une surface du matériau à base de silicium, pour former une première couche de revêtement (11) consiste à : ajouter le matériau à base de silicium, une substance quinone, et une substance trialdéhyde dans un solvant organique, pour obtenir une solution mixte, laisser la solution mixte en réaction à une température comprise entre 80 °C et 140 °C pendant 1 à 7 jours dans des conditions anaérobies, et une fois la réaction terminée, obtenir un matériau à base de silicium recouvert de la première couche de revêtement (11)
par refroidissement et séparation centrifuge, dans lequel la substance quinone comprend la 2,6-diaminoanthraquinone, et la substance trialdéhyde comprend le 2,4,6-triformylphloroglucinol.

9. Procédé de préparation selon la revendication 8, dans lequel une opération spécifique de croissance d'un matériau de structure organique covalente quinone-aldéhyde in situ sur une surface du matériau à base de silicium, pour former une première couche de revêtement consiste à : ajouter le matériau à base de silicium, un précurseur de substance quinone et une substance trialdéhyde dans un solvant organique, pour obtenir une solution mixte, laisser la solution mixte en réaction à une température comprise entre 80 °C et 140 °C pendant 1 à 7 jours dans des conditions anaérobies, et une fois la réaction terminée, collecter des matières solides par refroidissement et séparation centrifuge, et ajouter les matières solides dans l'oxydant, pour oxyder le précurseur de substance quinone en une substance quinone, de manière à obtenir un matériau à base de silicium recouvert de la première couche de revêtement, dans lequel le précurseur de substance quinone comprend le 2,5-diamino-1,4-dihydroxybenzo, la substance quinone comprend la 1,4-benzoquinone et la substance trialdéhyde comprend le 2,4,6-triformylphloroglucinol.

10. Procédé de préparation selon la revendication 8, dans lequel les procédés de revêtement de la surface de la première couche de revêtement avec le matériau conducteur à ions, pour former la seconde couche de revêtement comprennent un procédé hydrothermique, un procédé thermique au solvant, un procédé de précipitation en phase liquide, un procédé de broyage à boulets à haute énergie ou un procédé de coulée par fusion à haute température.

11. Dispositif de stockage d'énergie, comprenant une cathode, une anode, et un séparateur situé entre la cathode et l'anode, dans lequel l'anode comprend le matériau d'anode composite à base de silicium selon l'une quelconque des revendications 1 à 7.

12. Dispositif de stockage d'énergie selon la revendication 11, dans lequel le dispositif de stockage d'énergie comprend une batterie lithium-ion, une batterie sodium-ion, une batterie magnésium-ion, une batterie aluminium-ion, ou un supercondensateur.
